(19) Europäisches Patentamt
European Patent Office
Office européen des brevets

(11) EP 4 621 638 A1

(12) EUROPEAN PATENT APPLICATION

(43) Date of publication:
24.09.2025 Bulletin 2025/39

(21) Application number: 25158180.7

(22) Date of filing: 17.02.2025

(51) International Patent Classification (IPC):
G06K 19/02 (2006.01)

(52) Cooperative Patent Classification (CPC):
G06K 19/02

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.03.2024 FR 2402746

(71) Applicant: Idemia France
92400 Courbevoie (FR)

(72) Inventors:
• DONNELLY, Scott
92400 Courbevoie (FR)
• JENKINS, Reid
92400 Courbevoie (FR)

(74) Representative: Idemia
2, place Samuel de Champlain
92400 Courbevoie (FR)

(54) **MANUFACTURING METHOD OF A METAL TRANSACTION CARD, AND METAL TRANSACTION CARD THUS OBTAINED**

(57) The present invention relates to a manufacturing method of a metal transaction card comprising at least one metal layer (1), said method comprising steps of:
- providing the metal layer, the metal layer being made of a metal which has a melting temperature $T_m$, the metal layer having at least one surface which has a first color;
- providing a controllable concentrated heat source (3); and
- first heating the at least one surface (2) of the metal layer with the controllable concentrated heat source, to a first heating temperature T1 which is comprised in a temperature range $[T_{min}; T_{max}]$, $T_{max}$ being lower than the melting temperature $T_m$, the first heating step comprising a sub-step of changing the first color of the at least one surface into a second color, different from the first color.

The present invention also relates to a metal transaction card obtained by said method.

Figure 1

## Description

### Technical field

The present invention relates to a manufacturing method of a metal transaction card and to a metal transaction card obtained by said method.

### Background of the invention

Cards, such as transaction cards, are generally made from thermoplastic materials, such as polyvinyl chloride (PVC) and polyethylene terephthalate (PET). However, these transaction cards are susceptible to being damaged or destroyed if exposed to harsh environments. For example, transaction cards left exposed to moisture and sunlight may become warped, cracked and unusable. In addition, thermoplastic transaction cards may be easily bent or may be broken or cut, thereby damaging the transaction card and rendering it unusable.

Accordingly, it has been proposed to make a card which contains at least one layer of metal or which is entirely made of metal (referred to herein as a "metal card") to impart both strength and durability to the card, and allowing it to withstand exposure to the elements, such as moisture or sunlight.

Moreover, as transaction cards have nowadays become fashion accessories reflecting the lifestyle and values of their users, metal cards, compared to known thermoplastic cards, are for banks a valuable marketing asset to strengthen the link with their customers and build a lasting relationship. Metal cards are used to attract not only high-end customers but also younger affluent customers.

In this context, it is of particular interest to allow customers to personalize their metal cards, e.g. by allowing customers to select or upload their future card artwork instead of having one automatically assigned, so that each customer has a truly unique metal card.

US7494057B2 discloses a method of making a single transaction card comprising a continuous metal layer, e.g. comprising titanium or stainless steel, over an entire surface of the single transaction card, the method comprising the step of etching, via a laser beam, a surface of the continuous metal layer to provide a pattern of variable depth in said surface by removal of a portion of said surface.

This laser-etching step is accompanied by a melting of said surface caused by the laser beam, and then, a recrystallization of said surface when cooled to impart a color to said surface.

Thus, the coloring of said surface results from two phase transitions of the state of matter of the continuous metal layer, i.e. melting (liquid) and then recrystallization (solid).

In addition to be irreversible due to these phase transitions, this coloring method is able to provide only a glassy color finish and is only possible when carrying out a laser-etching step of said surface (i.e. removal of material from said surface).

Accordingly, there is a need to propose metal cards, such as metal transaction cards, that can be easily personalized, notably with desired personalization features, and notably by using a controlled and repeatable personalization process.

### Summary of the invention

The present invention aims at providing, according to a first aspect, a manufacturing method of a metal transaction card comprising at least one metal layer, said method comprising steps of:

- providing the metal layer, the metal layer being made of a metal which has a melting temperature $T_m$, the metal layer having at least one surface which has a first color;
- providing a controllable concentrated heat source, preferably a laser source, more preferably a Master Oscillator Power Amplifier (MOPA) laser system; and
- first heating the at least one surface of the metal layer with the controllable concentrated heat source, to a first heating temperature T1 which is comprised in a temperature range $[T_{min}; T_{max}]$, $T_{max}$ being lower than the melting temperature $T_m$, the first heating step comprising a sub-step of changing the first color of the at least one surface into a second color, different from the first color.

A metal layer being made of a metal means that the metal layer is made of one metal or of a metal alloy.

Here, $T_{min}$ is lower than $T_{max}$.

The terms "a second color different from the first color" mean that the first color and the second color may have a Delta E contrast value equal to or greater than 4, preferably equal to or greater than 15, and more preferably equal to or greater than 30.

The Delta E contrast is advantageously here the measurement of the color deviation defined by the International Committee on Illumination (CIE). A method is for example described in the 1976 CIE standard: ISO 11664.

Thus, for example, the Delta E, dE or even $\Delta E$, is defined as a measure of Euclidean distance between two colors considered in a color space. The formula established in 1976 by the CIE is for example:

$$\Delta E^* = \sqrt{[(L^*_2 - L^*_1)^2 + (a^*_2 - a^*_1)^2 + (b^*_2 - b^*_1)^2]}$$

Where:

$L^*_1$, $a^*_1$ and $b^*_1$ are the coordinates in the CIE-Lab color space of one of the two colors, and
$L^*_2$, $a^*_2$ and $b^*_2$ are those of another of the two colors.

However, there are other formulas for calculating Delta E (CIE 1976, CIE 1994, CIE 2000, CMC).

In the present invention, as $T_{max}$ is lower than the melting temperature $T_m$, the sub-step of changing the first color of the at least one surface into a second color, different from the first color, is carried out without any melting of the at least one surface while changing color, i.e. without any phase transition of the material of the at least one surface.

Moreover, the sub-step of changing the first color of the at least one surface into a second color, different from the first color, is carried out without any etching of the at least one surface, i.e. without any removal of material from the at least one surface.

Because of that, the present invention has several advantages.

Firstly, the sub-step of changing the first color of the at least one surface into the second color, different from the first color, is reversible.

Secondly, the at least one surface which has the second color may have a different surface finish, in particular a matte surface finish, compared to a known glassy surface finish of the prior art metal transaction cards. This provides different surface effect, therefore allowing to enhance the personalization and/or identification of metal transaction cards.

The matte surface finish may be determined by measuring the average surface roughness (Ra) value of the at least one surface which has the second color.

The Ra value may be measured according to ISO 25178 standard.

For example, the Ra value is measured by profilometry.

The matte surface finish may correspond to a Ra value of the at least one surface which has the second color comprised between 0.15 $\mu$m and 0.6 $\mu$m.

The Ra value of the at least one surface when having the first color, i.e. before the first heating step, and the Ra value of the at least one surface when having the second color, i.e. after the first heating step, may remain substantially equal.

In particular, the Ra value of the at least one surface when having the first color, i.e. before the first heating step, and the Ra value of the at least one surface when having the second color, i.e. after the first heating step, may be comprised between 0.15 $\mu$m and 0.6 $\mu$m.

$T_{min}$ is the minimum temperature at which the sub-step of changing the first color of the at least one surface into a second color is preferably carried out.

$T_{max}$ is the maximum temperature at which the sub-step of changing the first color of the at least one surface into a second color is preferably carried out while having the said changing the first color into a second color being a reversible phenomenon.

According to one example, at atmospheric pressure, $T_{min}$ is usually equal to about 193°C and $T_{max}$ is usually equal to about 445°C, when the metal layer is made of grade 305 stainless steel.

According to another example, at atmospheric pressure, $T_{min}$ is usually equal to about 198°C and $T_{max}$ is usually equal to about 1094°C, when the metal layer is made of tungsten.

According to one example embodiment, $T_{min}$ is generally greater than or equal to 100°C.

According to one example embodiment, $T_{max}$ is generally lower than or equal to 3500°C.

During the step of first heating, the at least one surface which has the first color is exposed to the controllable concentrated heat source.

The first heating step may comprise a sub-step of crystal lattice rearrangement of the at least one surface which has the first color.

The sub-step of crystal lattice rearrangement of the at least one surface which has the first color may be reversible.

Such reversibility is allowed because the sub-step of crystal lattice rearrangement of the at least one surface which has the first color is carried out without any melting of the at least one surface which has the first color, as $T_{max}$ being lower than the melting temperature $T_m$.

The first heating step may comprise a sub-step of providing a radiant heating, a convection heating, a localized induction heating, a high-frequency vibration induced heating, and/or a laser beam by the controllable concentrated heat source.

For example, the radiant heating is a microwave heating.

In one example embodiment, the first heating step comprises a sub-step of providing a laser beam by the controllable concentrated heat source.

The laser beam may be directed towards the metal layer, preferably the at least one surface which has the first color.

The laser beam may be orthogonal to the at least one surface which has the first color.

For example, the laser beam may be a pulsed laser beam.

The use of such pulsed laser beam may allow to obtain the second color with a satisfactory accuracy.

The accuracy may be determined by measuring a Delta E contrast value between the targeted second color and the obtained second color.

A satisfactory accuracy may correspond to a Delta E contrast value $\leq 5$, preferably a Delta E contrast value $\leq 4$, more preferably a Delta E contrast value $\leq 3$, and even more preferably a Delta E contrast value $\leq 2$.

For example, the pulsed laser beam may have a pulse energy density comprised between 0.002 J/mm$^2$ and 74 J/mm$^2$, preferably between 0.002 J/mm$^2$ and 1.747 J/mm$^2$, more preferably between 0.01 J/mm$^2$ and 1.747 J/mm$^2$, even more preferably between 0.02 J/mm$^2$ and 0.28 J/mm$^2$, and in particular between 0.04 J/mm$^2$ and 0.14 J/mm$^2$.

For example, the pulsed laser beam may have a pulse frequency comprised between 1 kHz and 1000 kHz, preferably between 2 kHz and 1000 kHz, more preferably between 10 kHz and 750 kHz, and even more preferably between 40 kHz and 500 kHz.

For example, the pulse frequency of the pulsed laser beam is comprised between 1 kHz and 20 kHz, or between 20 kHz and 1000 kHz.

For example, the pulse frequency of the pulsed laser beam is comprised between 25 kHz and 500 kHz, preferably between 50 kHz and 450 kHz, in particular when the metal layer is made of stainless steel, such as for example grade 305 stainless steel.

For example, the pulsed laser beam, when comprised between 1 kHz and 20 kHz, may have a pulse energy density comprised between 0.01 J/mm$^2$ and 74 J/mm$^2$, preferably between 0.02 J/mm$^2$ and 0.28 J/mm$^2$, and more preferably between 0.04 J/mm$^2$ and 0.14 J/mm$^2$.

For example, the pulsed laser beam, when comprised between 20 kHz and 1000 kHz, may have a pulse energy density comprised between 0.002 J/mm$^2$ and 1.747 J/mm$^2$.

For example, the pulsed laser beam may have a pulse duration comprised between 1 ns and 1000 ns, preferably between 1 ns and 400 ns, and more preferably between 2 ns and 300 ns.

For example, the pulse duration of the pulsed laser beam is comprised between 2 ns and 250 ns, preferably between 4 ns and 200 ns, in particular when the metal layer is made of stainless steel, such as for example grade 305 stainless steel.

For example, the pulsed laser beam may have a scanning speed comprised between 1 mm/s and 3000 mm/s, and preferably between 1000 mm/s and 3000 mm/s.

For example, the scanning speed of the pulsed laser beam is comprised between 1400 mm/s and 2200 mm/s, preferably between 1600 mm/s and 2000 mm/s, in particular when the metal layer is made of stainless steel, such as for example grade 305 stainless steel.

The pulsed laser beam may have a wavelength at 1064 nm.

The first heating step may comprise a sub-step of setting the pulsed laser beam with at least one among the parameters described above.

For example, Master Oscillator Power Amplifier (MOPA) laser systems are particularly adapted to provide a pulsed laser beam set with at least one among the above-mentioned parameters.

The first heating step may last from 1 min to 10 min, preferably from 2 min to 8 min, more preferably from 3 min to 6 min.

The manufacturing method may comprise a step of second heating at least one part of the least one surface which has the second color with the controllable concentrated heat source, to a second heating temperature T2 which is comprised in the temperature range [$T_{min}$; $T_{max}$], the second heating step comprising a sub-step of changing the second color of the at least one surface into a third color, different from the second color.

In one example embodiment, the second heating temperature T2 is equal to the first heating temperature T1.

The terms "a third color different from the second color" mean that the second color and the third color may have a Delta E contrast value equal to or greater than 4, preferably equal to or greater than 15, and more preferably equal to or greater than 30.

The third color may be identical to or different from the first color.

For example, when the third color is identical to the first color, the third color and the first color may have a Delta E contrast value less than 8, preferably less than 5, and more preferably less than 3.

For example, when the third color is different from the first color, the third color and the first color may have a Delta E contrast value equal to or greater than 4, preferably equal to or greater than 15, and more preferably equal to or greater than 30. The manufacturing method may comprise a step of annealing the metal layer.

For example, the step of annealing the metal layer may be carried out at a temperature comprised between 980°C and 1150°C, preferably at a temperature comprised between 990°C and 1140°C, more preferably at a temperature comprised between 1000°C and 1130°C, and even more preferably at a temperature comprised between 1010°C and 1121°C.

In one example embodiment, the step of annealing the metal layer is carried out at a temperature higher than 800°C, preferably higher than 900°C, more preferably higher than 1000°C, in particular when the metal layer is made of stainless steel, such as for example grade 305 stainless steel.

For example, the step of annealing the metal layer is carried out at a temperature comprised between 1000°C and 1150°C, preferably between 1005°C and 1130°C, more preferably between 1010°C and 1121°C, in particular when the metal layer is made of stainless steel, such as for example grade 305 stainless steel.

For example, the step of annealing the metal layer may be carried out for a period of time higher than 6 minutes, preferably for a period of from 12 minutes to 75 minutes.

In one example embodiment, the step of annealing the metal layer is carried out for a period of time comprised between 1 and 10 minutes, preferably between 1 and 6 minutes, in particular when the metal layer is made of stainless steel, such as for example grade 305 stainless steel.

For example, the step of annealing the metal layer may be carried out before the first heating step.

The manufacturing method may comprise a step of treating the metal layer with ions.

The ions may be anions.

For example, the anions are selected from the group consisting of nitrate, nitrite, acetate, carbonate and mixtures thereof.

For example, the step of treating the metal layer with ions may be carried out before the first heating step.

The manufacturing method may comprise a step of covering the at least one surface which has the second color with at least one protection layer.

For example, the protection layer is curable, notably ultraviolet-curable (UV-curable) and/or heat-curable.

The protection layer may comprise at least one adhesive.

For example, the adhesive is curable, notably ultraviolet-curable (UV-curable) and/or heat-curable.

For example, the adhesive comprises a resin.

For example, the resin is selected from the group consisting of methacrylates, acrylates, polyesters, polyurethanes, epoxies, vinyl esters and mixtures thereof.

For example, the resin is a bio-based resin.

In one example embodiment, the covering step may comprise a sub-step of coating the at least one surface which has the second color with the adhesive.

For example, the sub-step of coating the at least one surface which has the second color with the adhesive is carried out by spin-coating, dip-coating, spray-coating, blade-coating, roll-coating and/or any other coating techniques.

In another example embodiment, the covering step may comprise a sub-step of providing the protection layer, and then, a sub-step of applying the protection layer onto the at least one surface which has the second color.

For example, the protection layer, in particular the adhesive, may be in direct contact with the at least one surface which has the second color.

For example, the covering step may be carried out after the first heating step.

For example, the manufacturing method may comprise a step of curing the protection layer.

For example, the curing step may be carried out by applying UV and/or heat to the protection layer.

For example, the manufacturing method may comprise a step of laminating the protection layer which covers the at least one surface which has the second color with the metal layer.

For example, the laminating step may be carried out after the covering step.

For example, the laminating step may be carried out by applying heat at least onto the protection layer which covers the at least one surface which has the second color, notably a temperature higher than a curing temperature of the protection layer, notably a temperature comprised between 40°C and 200°C.

For example, the laminating step may be carried out by applying a pressure at least onto the protection layer which covers the at least one surface which has the second color.

For example, the pressure may be higher than 90 kPa, preferably higher than 95 kPa, and more preferably higher than 96.5 kPa.

For example, the pressure may be lower than 1034 kPa, preferably comprised between 90 kPa and 1034 kPa, more preferably comprised between 95 kPa and 1034 kPa, and even more preferably comprised between 96.5 kPa and 1034 kPa.

When the at least one surface which has the second color is covered with the protection layer, and when the manufacturing method comprises the step of second heating, the manufacturing method may comprise a step of removal of the protection layer which covers the at least one surface which has the second color.

The step of removal of the protection layer which covers the at least one surface which has the second color may be carried out before the step of second heating.

The present invention aims at providing, according to a second aspect, an apparatus for carrying out the manufacturing method as described above, the apparatus comprising:

- a support element configured to receive a metal layer, the metal layer being made of a metal which has a melting temperature $T_m$, the metal layer having at least one surface which has a first color, and
- a controllable concentrated heat source,

the controllable concentrated heat source being configured to heat the at least one surface of the metal layer to a first heating temperature T1 which is comprised in a temperature range $[T_{min}; T_{max}]$, $T_{max}$ being lower than the melting temperature $T_m$.

For example, the controllable concentrated heat source may be a laser source, a radiant heating source, a convection heating source, a localized induction heating source and/or a high-frequency vibration induced heating source.

For example, the radiant heating source is a microwave heating source.

For example, the controllable concentrated heat source is a laser source.

For example, the laser source may be selected from the group consisting of Master Oscillator Power Amplifier (MOPA) laser systems.

For example, the laser source may be configured to provide a pulsed laser beam.

For example, the pulsed laser beam may have at least one among the following features:

- a pulse energy density comprised between 0.002 $J/mm^2$ and 74 $J/mm^2$, preferably between 0.002 $J/mm^2$ and 1.747 $J/mm^2$, more preferably between 0.01 $J/mm^2$ and 1.747 $J/mm^2$, even more preferably between 0.02 $J/mm^2$ and 0.28 $J/mm^2$, and in particular between 0.04 $J/mm^2$ and 0.14 $J/mm^2$;
- a pulse duration comprised between 1 ns and 1000 ns, preferably between 1 ns and 400 ns, and more preferably between 2 ns and 300 ns;
- a pulse frequency comprised between 1 kHz and 1000 kHz, preferably between 2 kHz and 1000 kHz, more preferably between 10 kHz and 750 kHz, and even more preferably between 40 kHz and 500 kHz;
- a scanning speed comprised between 1 mm/s and 3000 mm/s, and preferably between 1000 mm/s and 3000 mm/s; and/or
- a wavelength at 1064 nm.

The present invention aims at providing, according to a third aspect, a metal transaction card obtained by the manufacturing method as described above, the metal transaction card comprising at least one metal layer having at least one surface which has a second color, the at least one surface having a matte surface finish.

The metal layer of the metal transaction card according to the present invention comprises at least one surface having a new surface finish, namely a matte surface finish, compared to the known glassy surface finish of the prior art metal transaction cards. This provides new surface effect, therefore allowing to enhance the personalization and/or identification of metal transaction cards.

The metal transaction card may be a contactless card, a magnetic stripe card, a credit card, a debit card, a stored-value card, a charge card, a prepaid card, a telephone card, a smart card, a bar code card, a rewards card, an identification card, an access card, an information storage card, an electronic commerce card and any other type of transaction card.

The metal transaction card, notably the metal layer, may comprise at least one pattern, the at least one pattern being formed, notably partially, by the at least one surface of the metal layer which has the second color.

The pattern may comprise at least one among a graphic, an alphanumeric character and/or a 2D barcode, notably QR codes.

The presence of such patterns may allow to further enhance the personalization and/or identification of the metal transaction card.

The metal transaction card may have a width and a length dimensions, in accordance with those of so-called ID-1, ID-2 or ID-3 cards, preferably ID-1, as defined in the ISO/IEC 7810:2019.

The metal layer may extend substantially the entire length dimension of the metal transaction card and substantially the entire width dimension of the metal transaction card.

The metal transaction card may comprise at least one protection layer which covers the at least one surface of the metal layer which has the second color.

Such protection may allow to protect the at least one surface of the metal layer which has the second color, in particular from outside wear, physical or chemical damages.

The protection layer may comprise a polyvinyl chloride (PVC) layer, notably a preconditioned polyvinyl chloride (PVC) layer.

The protection layer may comprise at least one adhesive.

For example, the adhesive is disposed between the polyvinyl chloride (PVC) layer and the at least one surface of the metal layer which has the second color.

For example, the adhesive is a cured adhesive, notably an ultraviolet-cured (UV-cured) adhesive and/or a heat-cured adhesive.

For example, the adhesive comprises a resin.

For example, the resin is selected from the group consisting of methacrylates, acrylates, polyesters, polyurethanes, epoxies, vinyl esters and mixtures thereof.

For example, the resin is a bio-based resin.

The protection layer, in particular the adhesive, may be in direct contact with the at least one surface of the metal layer which has the second color.

In one example embodiment, the protection layer extends substantially the entire length dimension of the metal layer and substantially the entire width dimension of the metal layer.

In another example embodiment, the protection layer does not extend substantially the entire length dimension of the metal layer and/or does not extend substantially the entire width dimension of the metal layer. In this case, the protection layer consists of a patch.

The protection layer may have a thickness which is comprised between 3 $\mu$m and 230 $\mu$m, preferably between 4 $\mu$m and 225 $\mu$m, more preferably between 5 $\mu$m and 220 $\mu$m.

The metal layer may be made from any metals or any metal alloy.

For example, the metal layer comprises stainless steel, such as for example grade 305 stainless steel or grade 316 stainless steel, tungsten, aluminium, titanium, copper, brass, tin, iron oxide, gallium, indium or alloy thereof.

The metal layer may comprise an ion treatment, preferably with anions, preferably selected from the group consisting of nitrate, nitrite, acetate, carbonate and mixtures thereof.

The metal layer may have a thickness which is comprised between 280 $\mu$m and 380 $\mu$m, preferably between 300 $\mu$m and 360 $\mu$m, more preferably between 310 $\mu$m and 350 $\mu$m, and even more preferably between 320 $\mu$m and 340 $\mu$m.

## Brief description of the drawings

Other particularities and advantages of the invention will also emerge from the following description.

In the accompanying drawings, given by way of non-limiting examples:

- Figure 1 shows a flowchart illustrating an example embodiment of a manufacturing method of a metal transaction card according to the present invention,
- Figure 2 shows an example embodiment of a step of providing a metal layer of the manufacturing method according to the present invention,
- Figure 3 shows an example embodiment of a step of providing a controllable concentrated heat source of the manufacturing method according to the present invention,
- Figure 4 shows an example embodiment of a first heating step of the manufacturing method according to the present invention,
- Figure 5 shows an example embodiment of a sub-step of changing the first color of the at least one surface into a second color of the manufacturing method according to the present invention, and
- Figure 6 shows an example embodiment of a metal transaction card according to the present invention.

## Detailed description of the invention

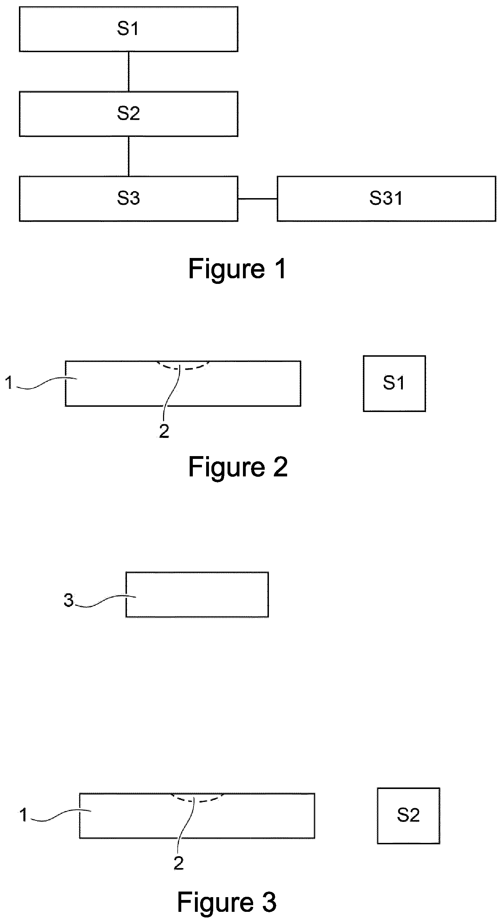

Figure 1 shows a flowchart illustrating an example embodiment of a manufacturing method of a metal transaction card comprising at least one metal layer, said method comprising:

- a step S1 of providing the metal layer, the metal layer being made of a metal which has a melting temperature $T_m$, the metal layer having at least one surface which has a first color;
- a step S2 of providing a controllable concentrated heat source; and
- a step S3 of first heating the at least one surface of the metal layer with the controllable concentrated heat source, to a first heating temperature T1 which is comprised in a temperature range $[T_{min}; T_{max}]$, $T_{max}$ being lower than the melting temperature $T_m$, the first heating step S3 comprising a sub-step S31 of changing the first color of the at least one surface into a second color, different from the first color.

Figure 2 shows an example embodiment of the step S1 of providing the metal layer 1.

The metal layer 1 has at least one surface 2 which has a first color.

The metal layer 1 is made of a pure metal or metal alloy which has a melting temperature $T_m$.

The metal layer 1 may be made from any metals or any metal alloy.

For example, the metal layer 1 comprises stainless steel, such as for example grade 305 stainless steel or grade 316 stainless steel, tungsten, aluminium, titanium, copper, brass, tin, iron oxide, gallium, indium or alloys thereof.

The metal layer 1 may have a thickness which is comprised between 280 $\mu$m and 380 $\mu$m, preferably between 300 $\mu$m and 360 $\mu$m, more preferably between 310 $\mu$m and 350 $\mu$m, and even more preferably between 320 $\mu$m and 340 $\mu$m.

Figure 3 shows an example embodiment of the step S2 of providing a controllable concentrated heat source 3.

The controllable concentrated heat source 3 is configured to heat the at least one surface 2 of the metal layer 1 which has the first color.

The controllable concentrated heat source 3 may be a laser source, preferably a Master Oscillator Power Amplifier (MOPA) laser system.

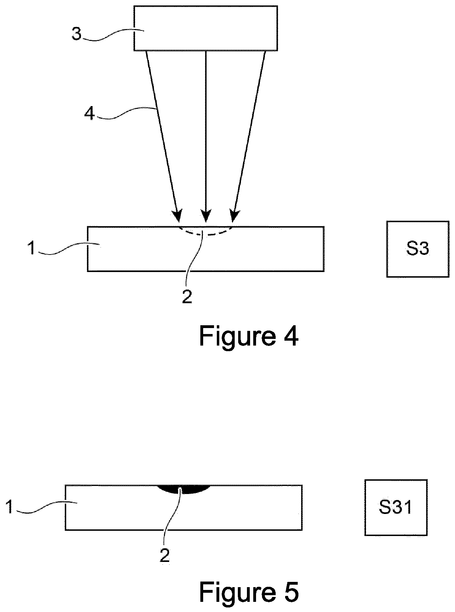

Figure 4 shows an example embodiment of the step S3 of first heating.

In this example embodiment, the step S3 comprises a sub-step of providing a laser beam 4 by the controllable concentrated heat source 3.

In this example embodiment, the laser beam 4 is directed towards the at least one surface 2 of the metal layer 1 which has the first color.

The laser beam 4 is preferably a pulsed laser beam.

In one example embodiment, the step S3 of first heating comprises a sub-step of setting the pulsed laser beam with at least one among the following parameters:

- a pulse energy density comprised between 0.002 J/mm$^2$ and 74 J/mm$^2$, preferably between 0.002 J/mm$^2$ and 1.747 J/mm$^2$, more preferably between 0.01 J/mm$^2$ and 1.747 J/mm$^2$, even more preferably between 0.02 J/mm$^2$ and 0.28 J/mm$^2$, and in particular between 0.04 J/mm$^2$ and 0.14 J/mm$^2$;
- a pulse duration comprised between 1 ns and 1000 ns, preferably between 1 ns and 400 ns, and more preferably between 2 ns and 300 ns;
- a pulse frequency comprised between 1 kHz and 1000 kHz, preferably between 2 kHz and 1000 kHz, more preferably between 10 kHz and 750 kHz, and even more preferably between 40 kHz and 500 kHz;
- a scanning speed comprised between 1 mm/s and 3000 mm/s, and preferably between 1000 mm/s and 3000 mm/s; and/or
- a wavelength at 1064 nm.

The first heating step S3 may comprise a sub-step of crystal lattice rearrangement of the at least one surface which has the first color.

This sub-step of crystal lattice rearrangement of the at least one surface which has the first color may be reversible.

As illustrated on Figure 5, the first heating step S3 comprises a sub-step S31 of changing the first color of the at least one surface 2 into a second color, different from the first color.

Table 1 below indicates example operating conditions allowing to carry out the sub-step of changing the first color of the at least one surface into a second color as listed in the first column of Table 1.

These operating conditions were determined for a first heating step using:

- a grade 305 stainless steel metal layer having a thickness of 330 $\mu$m and having at least one surface which has a silver color (i.e. natural stainless steel color) as the first color;

- a 20 watts MOPA laser system as the controllable concentrated heat source with a wavelength at 1064 nm;

- a continuous height calibration for optimal laser focus;

- a laser beam angle orthogonal to the at least one surface of the metal layer; and

- a time duration of the first heating step of 4 min and 24 seconds.

Table 1

| Second color | Power (%) | Scanning speed (mm/s) | Pulse frequency (kHz) | Pulse duration (ns) | Fill Style | Fill Spacing (mm) | Cross-angle |
|---|---|---|---|---|---|---|---|
| Black | 80 | 2000 | 150 | 8 | Bi-directional | 0.0010 | N/A |
| Red | 90 | 2000 | 250 | 14 | Bi-directional | 0.0010 | N/A |
| Dark blue | 100 | 2000 | 300 | 4 | Bi-directional | 0.0010 | N/A |
| Med blue | 100 | 2000 | 350 | 4 | Bi-directional | 0.0010 | N/A |
| Light blue | 100 | 2000 | 450 | 4 | Bi-directional | 0.0010 | N/A |
| Green | 100 | 1600 | 110 | 8 | Bi-directional | 0.0010 | N/A |
| White | 45 | 2000 | 50 | 200 | Cross / Bi-directional | 0.0500 | 90.00 |
| Gold | 80 | 2000 | 150 | 8 | Bi-directional | 0.0020 | N/A |
| Brown | 50 | 1800 | 200 | 30 | Bi-directional | 0.0050 | N/A |
| Violet | 100 | 2000 | 260 | 4 | Bi-directional | 0.0010 | N/A |
| Orange | 75 | 2000 | 300 | 8 | Cross / Bi-directional | 0.0020 | 90.00 |
| Yellow | 95 | 2000 | 80 | 4 | Bi-directional | 0.0010 | N/A |

"Fill spacing" refers to the distance between two passes of the laser beam.

"Cross angle" refers to the angle between two passes of the laser beam.

"Fill style" can be "Single directional" if the passes of the laser beam go all in the same direction, "Bi-directional" if the passes of the laser beam go back and forth and/or "Cross" if the passes of the laser beam cross with an angle defined by the cross-angle value.

It appears that 305 stainless steel surface modification happens between about 50 kHz and 450 kHz with a power level of a 20 watts laser set from 50% to 100%.

The surface color impact appears successful on 305 stainless steel as most primary colors and white could be achieved.

Testing was performed with a 20 watts laser, color in the blue, violet and green range, showed good surface modification and coloration at 100% power.

A more powerful laser could be applied to stainless steel metal layers, notably grade 305 stainless steel metal layers.

A more powerful laser could provide a wider range of adjustability and greater marking speed and might be required as other grades of stainless steel metal layers are to be explored for manufacturing of metal cards.

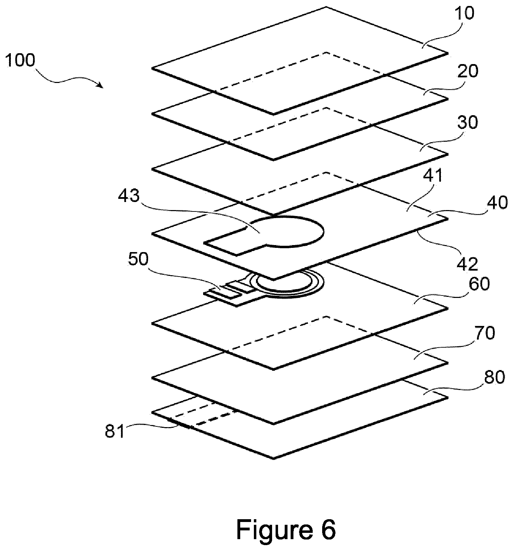

Figure 6 shows an example embodiment of a metal transaction card 100 according to the present invention.

The metal transaction card 100 comprises a metal layer 40.

The metal layer 40 here comprises a through-opening 43.

In this example, the metal layer 40 has a thickness of about 330 $\mu$m.

The metal transaction card 100 here comprises an antenna 50, which is located within the through-opening 43 of the metal layer 40.

In this example, the antenna 50 has a thickness which is preferably equal to the thickness of the metal layer 40.

For example, the thickness of the antenna 50 is about 330 $\mu$m.

The metal layer 40 and the antenna 50 located within the through-opening 43 of the metal layer 40 comprise two opposites main faces 41, 42, namely a top main face 41 and a bottom main face 42.

In this example embodiment, the metal transaction card 100 comprises a top preconditioned polyvinyl chloride (PVC) layer 30, and here, the top preconditioned PVC layer 30 covers the top main face 41.

The top preconditioned PVC layer 30 is bonded to the top main face 41 using an adhesive.

For example, the adhesive is curable, notably ultraviolet-curable (UV-curable) and/or heat-curable.

For example, the adhesive comprises a resin.

In addition, the metal transaction card 100 comprises a top art/core layer 20, and here, the top art/core layer 20 covers the top preconditioned PVC layer 30.

Then, the metal transaction card 100 comprises a top overlay 10, and here, the top overlay 10 covers the top art/core layer 20.

For example, the top preconditioned PVC layer 30 has a thickness comprised between 5 $\mu$m and 15 $\mu$m.

For example, the top preconditioned PVC layer 30 is transparent or semi-transparent.

For example, the top art/core layer 20 has a thickness comprised between 127 $\mu$m and 145 $\mu$m.

For example, the top overlay 10 has a thickness of about 45 $\mu$m.

For example, the top overlay 10 is transparent or semi-transparent.

The metal transaction card 100 comprises a bottom preconditioned PVC layer 60, and the bottom preconditioned PVC layer 60 covers the bottom main face 42.

The bottom preconditioned PVC layer 60 is bonded to the bottom main face 42 using an adhesive.

For example, the adhesive is curable, notably ultraviolet-curable (UV-curable) and/or heat-curable.

For example, the adhesive comprises a resin.

Then, the metal transaction card 100 comprises a bottom art/core layer 70, and the bottom art/core layer 70 covers the bottom preconditioned PVC layer 60.

And then, the metal transaction card 100 comprises a bottom overlay 80, and the bottom overlay 80 covers the bottom art/core layer 70.

In this example embodiment, the bottom overlay 80 comprises a magnetic strip 81.

For example, the bottom preconditioned PVC layer 60 has a thickness comprised between 5 $\mu$m and 15 $\mu$m.

For example, the bottom preconditioned PVC layer 60 is transparent or semi-transparent.

For example, the bottom art/core layer 70 has a thickness comprised between 127 $\mu$m and 145 $\mu$m.

For example, the bottom overlay 80 has a thickness of about 45 $\mu$m. For example, the bottom overlay 80 is transparent or semi-transparent.

The manufacturing method of such a metal transaction card 100 can comprise, for example, a first lamination step, followed by a second lamination step.

The first lamination step consists of laminating the metal layer 40 and the antenna 50 located within the through-opening 43 of the metal layer 40 with the top preconditioned PVC layer 30 and the bottom preconditioned PVC layer 60, in order to obtain a prelam.

The second lamination step consists of laminating the prelam with the top art/core layer 20 and the bottom art/core layer 70, and with the top overlay 10 and the bottom overlay 80, in order to obtain the metal transaction card 100.

Such a method, according to a specific example embodiment, can comprise the following steps.

For example, the method can comprise steps of formation of the metal layer.

For example, it can comprise steps of:

1) providing the metal layer;
2) formation of the through-opening in the metal layer.

For example, the method can then comprise first lamination steps.

For example, it can comprise steps of:

3) placing the bottom preconditioned PVC layer on a resin dispense table;
4) dispensing about 14g of resin on the bottom preconditioned PVC layer;
5) placing the metal layer onto the resin, centering the metal layer on the bottom preconditioned PVC layer;
6) placing the antennas into the through-opening of the metal layer;
7) dispensing about 14g of resin on the metal layer;
8) placing the top preconditioned PVC layer onto the resin;
9) placing in the vacuum chamber and processing the sheet down to or below an evacuation of 550 $\mu$m (29.90 inHg);
10) moving the superimposed layers to the light table to check for any misalignment of the metal layer or antennas, and correcting alignment issues if any;
11) first lamination step using standard production first lamination program to obtain the prelam.

For example, the method can then comprise second lamination steps.

For example, it can comprise steps of:

12) trimming off excess material from the prelam;
13) collating the top art/core layer, the bottom art/core layer, the top overlay and the bottom overlay on the prelam;
14) second lamination step using standard production second lamination program to obtain the metal transaction card.

For example, the method can then comprise post lamination processing steps.

For example, it can comprise steps of:

15) ultraviolet (UV) cured printing, performed for example by printers from Mimaki company;

16) singulation, performed for example by punch or using a milling process;

17) inspecting the metal transaction card.

Such a method can be implemented with standard metal card manufacturing machines, tooling and programs, except where otherwise specified.

In particular, the first heating step as described above can be implemented before the step 3) of placing the bottom preconditioned PVC layer on a resin dispense table, or even before the step 2) of formation of the through-opening in the metal layer.

The first heating step as described above can therefore be implemented before any lamination steps as described above.

Accordingly, the part of the method comprising these lamination steps remains unchanged when implementing the first heating step as described above.

The first heating step can be followed by a step of cleaning of the metal layer, if needed.

## Claims

1. A manufacturing method of a metal transaction card comprising at least one metal layer, said method comprising steps of:

   - providing the metal layer, the metal layer being made of a metal which has a melting temperature $T_m$, the metal layer having at least one surface which has a first color;
   - providing a controllable concentrated heat source; and
   - first heating the at least one surface of the metal layer with the controllable concentrated heat source, to a first heating temperature T1 which is comprised in a temperature range $[T_{min}; T_{max}]$, $T_{max}$ being lower than the melting temperature $T_m$, the first heating step comprising a sub-step of changing the first color of the at least one surface into a second color, different from the first color.

2. The method according to claim 1, wherein the first heating step comprises a sub-step of crystal lattice rearrangement of the at least one surface which has the first color.

3. The method according to claim 1 or 2, wherein the first heating step comprises a sub-step of providing a pulsed laser beam by the controllable concentrated heat source.

4. The method according to claim 3, wherein the first heating step comprises a sub-step of setting the pulsed laser beam with at least one among the following parameters:

   - a pulse energy density comprised between 0.002 J/mm$^2$ and 74 J/mm$^2$, preferably between 0.002 J/mm$^2$ and 1.747 J/mm$^2$, more preferably between 0.01 J/mm$^2$ and 1.747 J/mm$^2$, even more preferably between 0.02 J/mm$^2$ and 0.28 J/mm$^2$, and in particular between 0.04 J/mm$^2$ and 0.14 J/mm$^2$;
   - a pulse duration comprised between 1 ns and 1000 ns, preferably between 1 ns and 400 ns, and more preferably between 2 ns and 300 ns;
   - a pulse frequency comprised between 1 kHz and 1000 kHz, preferably between 2 kHz and 1000 kHz, more preferably between 10 kHz and 750 kHz, and even more preferably between 40 kHz and 500 kHz;
   - a scanning speed comprised between 1 mm/s and 3000 mm/s, and preferably between 1000 mm/s and 3000 mm/s; and/or
   - a wavelength at 1064 nm.

5. The method according to any one of claims 1 to 4, comprising a step of second heating at least one part of the least one surface which has the second color with the controllable concentrated heat source, to a second heating temperature T2 which is comprised in the temperature range $[T_{min}; T_{max}]$, the second heating step comprising a sub-step of changing the second color of the at least one surface into a third color, different from the second color.

6. The method according to any one of claims 1 to 5, wherein the method comprises a step of covering the at least one surface which has the second color with at least one protection layer.

7. The method according to claim 6, wherein the covering step is carried out after the first heating step.

8. The method according to claim 6 or 7, comprising a step of laminating the protection layer with the metal layer.

9. A metal transaction card obtained by the manufacturing method according to any one of claims 1 to 8, the metal transaction card comprising at least one metal layer having at least one surface which has a second color, the at least one surface having a matte surface finish.

10. The metal transaction card according to claim 9, comprising at least one pattern, the at least one pattern being formed by the at least one surface of the metal layer which has the second color.

11. The metal transaction card according to claim 9 or 10, comprising at least one protection layer which covers the at least one surface of the metal layer which has the second color.

12. The metal transaction card according to claim 11, in which the protection layer comprises at least one adhesive, the adhesive being preferably a cured adhesive, notably an ultraviolet-cured (UV-cured) adhesive and/or a heat-cured adhesive.

13. The metal transaction card according to claim 11 or 12, in which the protection layer has a thickness which is comprised between 1 $\mu$m and 25 $\mu$m, preferably between 3 $\mu$m and 20 $\mu$m, more preferably between 5 $\mu$m and 15 $\mu$m.

14. The metal transaction card according to any one of claims 9 to 13, in which the metal layer has a thickness which is comprised between 280 $\mu$m and 380 $\mu$m, preferably between 300 $\mu$m and 360 $\mu$m, more preferably between 310 $\mu$m and 350 $\mu$m, and even more preferably between 320 $\mu$m and 340 $\mu$m.

15. The metal transaction card according to any one of claims 9 to 14, in which the metal layer comprises stainless steel, tungsten, aluminium, titanium, copper, brass, tin, iron oxide, gallium, indium or alloy thereof.

Figure 1

Figure 2

Figure 3

3

4

1

2

S3

Figure 4

1

2

S31

Figure 5

Figure 6

| | Application Number |
|---|---|
| | EP 25 15 8180 |

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/110231 A1 (FINN DAVID [DE]) 15 April 2021 (2021-04-15) * paragraph [0005] * * paragraph [0191] * * paragraph [0199] * * figures 3A,3B * | 1-15 | INV. G06K19/02 |
| X | US 2015/339564 A1 (HERSLOW JOHN [US] ET AL) 26 November 2015 (2015-11-26) * claim 2 * * figure 1b * | 1-15 | |
| A | US 2019/332907 A1 (HERSLOW JOHN [US]) 31 October 2019 (2019-10-31) * paragraph [0060] * | 1-15 | |

| TECHNICAL FIELDS SEARCHED (IPC) |
|---|
| G06K |

The present search report has been drawn up for all claims

| Place of search | Date of completion of the search | Examiner |
|---|---|---|
| Munich | 30 June 2025 | Bhalodia, Anil |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 8180

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | Publication date | Patent family member(s) | Publication date |
|---|---|---|---|
| US 2021110231 A1 | 15-04-2021 | NONE | |
| US 2015339564 A1 | 26-11-2015 | AU 2015264126 A1 | 01-12-2016 |
| | | BR 112016027213 A2 | 08-06-2021 |
| | | CN 106462782 A | 22-02-2017 |
| | | EP 3146476 A1 | 29-03-2017 |
| | | JP 6680767 B2 | 15-04-2020 |
| | | JP 7197452 B2 | 27-12-2022 |
| | | JP 7603046 B2 | 19-12-2024 |
| | | JP 7677939 B2 | 15-05-2025 |
| | | JP 2017525601 A | 07-09-2017 |
| | | JP 2020015321 A | 30-01-2020 |
| | | JP 2023030035 A | 07-03-2023 |
| | | JP 2023051955 A | 11-04-2023 |
| | | NZ 726408 A | 28-09-2018 |
| | | NZ 743934 A | 24-12-2021 |
| | | NZ 743935 A | 28-01-2022 |
| | | SG 10201801283S A | 27-04-2018 |
| | | SG 11201609690Y A | 29-12-2016 |
| | | US 2015339564 A1 | 26-11-2015 |
| | | US 2017098151 A1 | 06-04-2017 |
| | | US 2018129927 A1 | 10-05-2018 |
| | | US 2018197062 A1 | 12-07-2018 |
| | | US 2021166098 A1 | 03-06-2021 |
| | | US 2024403592 A1 | 05-12-2024 |
| | | WO 2015179639 A1 | 26-11-2015 |
| US 2019332907 A1 | 31-10-2019 | DK 2956310 T3 | 14-10-2019 |
| | | EP 2956310 A2 | 23-12-2015 |
| | | EP 3345771 A2 | 11-07-2018 |
| | | ES 2750216 T3 | 25-03-2020 |
| | | PL 2956310 T3 | 31-12-2019 |
| | | US 2014224881 A1 | 14-08-2014 |
| | | US 2017300790 A1 | 19-10-2017 |
| | | US 2019332907 A1 | 31-10-2019 |
| | | WO 2014126960 A2 | 21-08-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7494057 B2